# EUROPÄISCHE PATENTSCHRIFT

(11) **EP 1 031 769 B1**
(45) Veröffentlichungstag und Bekanntmachung des Hinweises auf die Patenterteilung: **13.08.2003**
(21) Anmeldenummer: 99125202.4
(22) Anmeldetag: 17.12.1999
(51) Int. Cl.: F16H 61/04, B60K 41/22

(54) **Automatisierter Antriebsstrang für ein Kraftfahrzeug und Verfahren zum Steuern eines Antriebsstranges**
Automated vehicle transmission and method of controlling said transmission
Boîte de vitesses robotisée pour véhicule et système de commande pour une telle boîte de vitesses

(30) Priorität: 27.02.1999 DE 19908602
(43) Veröffentlichungstag der Anmeldung: 30.08.2000
(73) Patentinhaber: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Seufert, Martin, 71229 Leonberg (DE); Harst, Richard, 74078 Heilbronn (DE)
(74) Vertreter: Steil, Christian, Dipl.-Ing.

(56) Entgegenhaltungen:
- EP-A- 0 479 737
- EP-A- 0 695 665
- DE-A- 2 924 656
- DE-A- 19 859 458
- US-A- 3 802 293
- US-A- 4 475 639
- PATENT ABSTRACTS OF JAPAN vol. 1997, no. 02, 28. Februar 1997 (1997-02-28) -& JP 08 277890 A (AQUEOUS RES:KK), 22. Oktober 1996 (1996-10-22)
- PATENT ABSTRACTS OF JAPAN vol. 007, no. 141 (M-223), 21. Juni 1983 (1983-06-21) & JP 58 054260 A (MITSUBISHI DENKI KK), 31. März 1983 (1983-03-31)

## Beschreibung

Die Erfindung betrifft ein Verfahren zum Steuern eines Antriebsstranges eines Kraftfahrzeuges, der eine einzelne Reibungskupplung, die mittels eines ersten Aktuators betätigt wird und eingangsseitig mit einem Motor des Kraftfahrzeugs verbunden ist, und ein Stufengetriebe aufweist, das mit der Ausgangsseite der Reibungskupplung verbunden ist und das eine erste Mehrzahl von Radsätzen zum Ein- und Auslegen von entsprechenden Vorwärtsgängen und eine entsprechende Mehrzahl von formschlüssigen Schaltkupplungen aufweist, die jeweils eine eigene Synchronisierungseinrichtung aufweisen und die mittels einer zweiten Mehrzahl von zweiten Aktuatoren zum Ein- und Auslegen der Gänge betätigt werden, wobei bei einem Gangwechsel der erste Aktuator und zweite Aktuatoren zueinander koordiniert angesteuert werden.

Die vorliegende Erfindung betrifft ferner einen automatisierten Antriebsstrang für ein Kraftfahrzeug, zur Durchführung des Steuerverfahrens, mit einer einzelnen Reibungskupplung, die mittels eines ersten Aktuators betätigbar und eingangsseitig mit einem Motor des Kraftfahrzeugs verbunden ist, einem Stufengetriebe, das mit der Ausgangsseite der Reibungskupplung verbunden ist und das eine erste Mehrzahl von Radsätzen zum Einund Auslegen von entsprechenden Vorwärtsgängen und eine entsprechende Mehrzahl von formschlüssigen Schaltkupplungen aufweist, die jeweils eine eigene Synchronisierungseinrichtung aufweisen und die mittels einer zweiten Mehrzahl von zweiten Aktuatoren zum Ein- und Auslegen der Gänge betätigbar sind, und einer Steuereinrichtung, die den ersten Aktuator und die zweiten Aktuatoren zueinander koordiniert ansteuert.

Ein derartiges Verfahren und ein solcher automatisierter Antriebsstrang sind aus der EP 0 695 665 A1 bekannt.

Bei den Getrieben für Kraftfahrzeuge, insbesondere Personenkraftfahrzeuge (Pkw) unterscheidet man generell zwischen Automatikgetrieben und Handschaltgetrieben.

Erstere weisen einen hydrodynamischen Drehmomentwandler und eine Mehrzahl von Planetenradsätzen auf, die mittels Bremsen und Kupplungen überschneidend angesteuert werden können, so daß die Gangwechsel ohne jeden Zugkrafteinbruch erfolgen.

Handschaltgetriebe hingegen sind als Stufengetriebe in Vorgelegebauweise ausgeführt. Bei Gangwechseln entsteht zwischen dem Zeitpunkt des Auslegens eines Ganges und dem Zeitpunkt des Einlegens eines neuen Ganges ein Zugkrafteinbruch, da eine dem Stufengetriebe zugeordnete Reibungstrennkupplung (typischerweise eine als Trockenkupplung ausgebildete Anfahrkupplung) hierbei geöffnet wird. Der Motor wird dabei also von dem Getriebe und somit auch von den Antriebsrädern vollkommen entkoppelt.

Die zum Ein- und Auslegen der Gänge verwendeten formschlüssigen Schaltkupplungen der Getriebe von Pkw enthalten heutzutage standardmäßig jeweils eine Sperrsynchronisierung. Eine Sperrsynchronisierung enthält eine Synchronisierungseinrichtung (typischerweise eine Reibungsvorkupplung), mittels der - bei geöffneter Reibungstrennkupplung, also lastfrei - eine Drehzahlangleichung zwischen einem Radsatz und einer Welle (Abtriebswelle) erfolgt. Eine Sperreinrichtung der Sperrsynchronisierung verhindert oder behindert das Herstellen des Formschlusses der Schaltkupplung (also das Einlegen des Ganges) so lange, bis annähernd ein Gleichlauf erzielt ist.

Während der bei einem Gangwechsel auftretende Zugkrafteinbruch beim Schalten von Hand als nicht besonders unangenehm empfunden wird, wird ein damit einhergehendes "Nicken" des Fahrzeugs dann als Komforteinbuße empfunden, wenn das Stufengetriebe automatisiert ist. Bei automatisiertem Stufengetriebe werden die Betätigungen der Reibungskupplung und der Schaltmuffen statt mit dem Fuß und der Hand durch von einer Steuereinrichtung koordiniert angesteuerte Aktuatoren übernommen. Da der Fahrer bei solchen automatisierten Stufengetrieben während Gangwechseln nicht beschäftigt ist, wird der Zugkrafteinbruch als unkomfortabel empfunden.

Zur Linderung dieses Problems gibt es verschiedene Ansätze.

Bei dem aus der WO 93/10378 bekannten Stufengetriebe wird versucht, die Dauer des Zugkrafteinbruches zu verkürzen. Dies wird erreicht durch zwei Maßnahmen. Zum einen sind bei dem dort offenbarten Getriebe die einem Schaltpaket zugeordneten zwei Gänge nicht aufeinanderfolgende Gänge. Zum zweiten werden die Sperr-Synchronisierungen mehrerer Schaltpakete beim Gangwechsel gleichzeitig belastet. Mit anderen Worten erfolgt nach dem Auslegen des vorherigen Ganges die Synchronisierung auf die Drehzahl des folgenden Ganges nicht nur mittels der zugeordneten Sperr-Synchronisierung, sondern zusätzlich mittels derjenigen Sperr-Synchronisierung eines weiteren Ganges. Hierdurch soll es möglich sein, die Schaltnebenzeiten zu verringern, es können kürzere Schaltzeiten erzielt werden. Die Dauer des Zugkrafteinbruches wird daher verringert.

Aus der DE 44 01 812 A1 ist ein weiteres Prinzip zur Linderung des Zugkrafteinbruches bekannt. Bei dieser Lösung wird statt einer einzelnen Reibungstrennkupplung eingangsseitig ein Doppelkupplungssystem vorgesehen. Während die eine Reibungstrennkupplung des Doppelkupplungssystem einer Getriebeeingangswelle für die Gänge eins bis fünf zugeordnet ist, ist die zweite Reibungstrennkupplung dem höchsten, dem sechsten Gang zugeordnet. Hierdurch kann während eines Gangwechsels in den unteren Gängen, bei denen die erste Reibungstrennkupplung in an sich bekannter Weise zunächst vollkommen geöffnet und nach Abschluß des Gangwechsels wieder geschlossen wird, die zweite Reibungstrennkupplung, die normalerweise geöffnet ist, kurzzeitig geschlossen werden, so daß auf die Abtriebswelle des Getriebes kurzzeitig das Moment des sechsten Ganges gelegt werden kann.

Bei einem Gangwechsel in den unteren Gängen tritt daher immer noch ein erheblicher Zugkrafteinbruch auf, da das Moment des sechsten Ganges deutlich niedriger ist als das der unteren Gänge.

Aus der DE 29 24 656 A1 ist ein weiteres Vorgelegewellengetriebe bekannt, bei dem eingangsseitig eine einzelne Reibungstrennkupplung vorgesehen ist und bei dem dem Radsatz für den zweiten Gang keine herkömmliche Schaltkupplung, sondern eine Naß-Lamellenreibkupplung zugeordnet ist. Ferner ist das Losrad des ersten Ganges mittels eines Freilaufes an der entsprechenden Welle gelagert. Daher kann bei einem Gangwechsel vom ersten in den zweiten Gang das getriebeeingangsseitig anstehende Motormoment ohne Öffnen der Reibungstrennkupplung und ohne jeden Zugkrafteinbruch auf den zweiten Gang gelegt werden. Gangwechsel in den höheren Gängen erfolgen hingegen wieder mit Zugkraftunterbrechung, da in diesen Fällen die eingangsseitige Trennkupplung geöffnet werden muß.

Aus der DE 197 35 759 A1 ist ein automatisiertes Geschwindigkeitswechselgetriebe in Vorgelegebauart bekannt. Die Schaltkupplungen zum Ein- und Auslegen von Gängen sind rein formschlüssig als Klauen- oder Ziehkeilkupplungen ausgebildet. Gangwechsel finden statt, indem die relative Drehstellung der miteinander zu verbindenden Elemente überwacht wird, bei Schaltbereitschaft ein Signal abgegeben und dann mittels einer hochdynamischen Hydraulik die eine Schaltkupplung geöffnet und die neue geschlossen wird. Beim Betätigen der Schaltkupplungen wird eine eingangsseitige Reibungstrennkupplung im Rutschzustand gehalten.

Ergänzend ist auf dem Gebiet solcher automatisierter Stufengetriebe mit Zugkraftunterstützung noch die DE 195 48 622 C1 zu nennen.

Schließlich sind noch die sogenannten "echten" Doppelkupplungsgetriebe bekannt, beispielsweise aus der DE 38 12 327 C2. Bei diesen Getrieben sind eingangsseitig zwei parallele Reibungskupplungen vorgesehen. Die zwei Reibungskupplungen sind zwei parallelen Zweigen des Getriebes zugeordnet, wobei die Parallelität in der Regel durch eine Hohlwellenkonstruktion erzielt wird. Die Gänge sind abwechselnd auf den einen und den anderen Antriebszweig aufgeteilt, so daß bei überschneidender Ansteuerung der zwei Kupplungen das eingangsseitig anstehende Motormoment jeweils ohne jeden Zugkrafteinbruch von dem einen Zweig auf den anderen Zweig übergeben werden kann.

Die eingangs genannte WO 93/10378 leidet an dem Nachteil, daß bei einem Gangwechsel die zentrale Reibungskupplung geöffnet wird, so daß ein als Komforteinbuße empfundener Zugkrafteinbruch bei einem Gangwechsel stattfindet, obgleich die Zeitdauer des Zugkrafteinbruches optimiert werden kann. Bei dem Getriebe der DE 44 01 812 A1 ist der konstruktive Aufwand aufgrund der eingangsseitigen Doppelkupplung vergleichsweise hoch. Ferner kann zur Zugkraftunterstützung maximal das Moment des sechsten Ganges auf die Antriebsräder übertragen werden. Auch bei der DE 29 24 656 A1 ist der konstruktive Aufwand nicht unerheblich, insbesondere aufgrund des Freilaufes für den ersten Gang. Das Konzept der DE 197 35 759 A1 kann Zugkraftunterbrechungen nicht vollkommen vermeiden und erfordert eine sehr stabile Konstruktion. Bei echten Doppelkupplungsgetrieben, wie sie aus der DE 38 123 27 C2 bekannt geworden sind, entsteht nicht nur der konstruktive Aufwand einer doppelten Reibungskupplung; es ist auch eine vergleichsweise lange Hohlwellenkonstruktion notwendig, die solche Getriebe teuer macht.

Vor diesem Hintergrund besteht das der Erfindung zugrunde liegende Problem darin, ein Verfahren zum Steuern eines Antriebsstranges für ein Kraftfahrzeug bzw. einen automatisierten Antriebsstrang der eingangs genannten Art anzugeben, bei denen mit nur einer einzigen als Trennkupplung ausgebildeten Reibungskupplung Gangwechsel möglichst schnell und mit einer möglichst großen Zugkraftunterstützung durchführbar sind.

Diese Aufgabe wird bei dem eingangs genannten Verfahren zum Steuern eines Antriebsstranges dadurch gelöst, daß die Synchronisierungseinrichtungen für einen Synchronisierungsvorgang unter Teillast geeignet, und es werden die Aktuatoren so angesteuert, daß die Reibungskupplung bei wenigstens einer Art von Gangwechsel nicht vollständig geöffnet wird, wobei bei dem Gangwechsel vor dem Auslegen des eingelegten Ganges eine Synchronisierungseinrichtung des einzulegenden Ganges schlupfend betätigt wird, um das getriebeeingangsseitig anstehende Moment zu übernehmen.

Die Aufgabe wird ferner durch einen automatisierten Antriebsstrang zur Durchführung des erfindungsgemäßen Verfahrens gelöst.

Die Aufgabe wird auf diese Weise vollkommen gelöst.

Durch die Abkehr von dem Gedanken, bei einem Stufengetriebe während eines Gangwechsels die eingangsseitige, als Trennkupplung ausgebildete Reibungskupplung immer öffnen zu müssen, wird bei dem ersten Aspekt der erfindungsgemäßen Lösung die Reibungskupplung nicht vollständig geöffnet, sondern bleibt entweder ganz geschlossen oder wird im schlupfenden Zustand betrieben. Hierdurch wird die treibende Verbindung zwischen Motor des Kraftfahrzeugs einerseits und Getriebe des Kraftfahrzeugs andererseits zu keinem Zeitpunkt während eines Gangwechsels aufgehoben. Durch die geeignete Auslegung der Schaltkupplungen kann der Gangwechsel so erfolgen, daß bei einem Gangwechsel bei noch eingelegtem auszulegendem Gang zunächst das anstehende Drehmoment bereits vollkommen auf die Schaltkupplung des einzulegenden Ganges umgeleitet wird. Hierdurch entsteht an der Schaltkupplung des auszulegenden Ganges für eine kurze Zeitspanne ein Zustand der - weitgehenden - Lastfreiheit, so daß sich der Gang in dieser Zeitspanne leicht auslegen läßt. Bei der folgenden Synchronisierungsphase der Schaltkupplung für den einzulegenden Gang bleibt die eingangsseitige Reibungskupplung wenigstens teilweise geschlossen, so daß das vom Motor anstehende eingangsseitige Moment über die dann im Schlupfbetrieb arbeitende Reibungskupplung und die Synchronisierungsmittel für den einzulegenden Gang auf die Antriebsräder des Fahrzeugs übertragen wird.

Durch die Maßnahme, daß die Synchronisierungseinrichtungen für einen Synchronisierungsvorgang unter Teillast geeignet sind, ist es möglich, das Stufengetriebe des erfindungsgemäßen Antriebsstranges ohne weitere, von den jeweiligen Schaltkupplungen separate Synchronisierungsmittel auszugestalten. Dies hat den Vorteil, daß die Gangwechsel unter Teillast sowohl für das Hochschalten als auch für das Herunterschalten durchführbar sind. Im Gegensatz hierzu wäre eine zentrale Radsatzbremse nur für Hochschaltvorgänge von Nutzen, für Herunterschaltvorgänge müßten hingegen zusätzlich zentrale Antriebsmittel vorgesehen werden.

Der automatisierte Antriebsstrang und das entsprechende Verfahren arbeiten bei einem Gangwechsel gemäß dem ersten Aspekt der Erfindung mit Zugkraftunterstützung, im Gegensatz zu der WO 93/10378. Im Gegensatz zur DE 197 35 759 A1 erfolgt bei dem Gangwechsel zu keinem Zeitpunkt eine Zugkraftunterbrechung. Ferner ist es nicht notwendig, eingangsseitig zwei Reibungskupplungen vorzusehen oder gar eine Hohlwellenkonstruktion. Schließlich sind die Schaltkupplungen des Antriebsstranges formschlüssig ausgebildet, so daß die Gesamtaktuatorik bei eingelegtem Gang entlastet werden kann und keine Hilfsenergie braucht. Dies ist auch aus Sicherheits- und Wirkungsgradgründen ein wichtiger Vorteil.

Durch die Maßnahme, die Synchronisierungseinrichtung des Zielgangs schlupfend zu betätigen, kann bei der Schaltkupplung des eingelegten Ganges eine Zeitspanne der Lastfreiheit erreicht werden, so daß sich dieser Gang auch unter Last auslegen läßt.

Dabei ist es bei dem erfindungsgemäßen Verfahren von Vorteil, wenn bei dem Gangwechsel vor dem Auslegen des eingelegten Ganges zusätzlich zu der Synchronisierungseinrichtung des einzulegenden Ganges eine weitere Synchronisierungseinrichtung eines bei dem Gangwechsel nicht involvierten Ganges schlupfend betätigt wird, um das anstehende Moment zum Einlegen des einzulegenden Ganges teilweise zu übernehmen.

Dabei ist es besonders bevorzugt, wenn bei dem Gangwechsel vor dem Auslegen des eingelegten Ganges die zugeordnete Schaltkupplung in Auslegerichtung vorgespannt wird.

Durch das Vorspannen "flutscht" der auszulegende Gang aus, sobald der Zustand der Lastfreiheit erreicht ist.

Gemäß einer weiteren bevorzugten Ausführungsform wird bei dem Gangwechsel die Reibungskupplung teilweise geöffnet, und/oder das von dem Motor bereitgestellte Moment wird mittels eines Motoraktuators verringert.

Hierdurch wird das getriebeeingangsseitig anstehende Moment reduziert, um die Synchronisierungseinrichtung des einzulegenden Ganges nicht zu überlasten.

Der Motoraktuator kann üblicherweise in das Motormanagement eingreifen, um durch "elektronisches Gaswegnehmen" das getriebeeingangsseitig anstehende Moment zu verringern.

Schließlich ist es bevorzugt, wenn hierbei nach dem Auslegen des zuvor eingelegten Ganges, nach Erreichen der Synchrondrehzahl und während des Einlegens des einzulegenden Ganges das an dem Stufengetriebe anstehende Moment kurzfristig verringert wird, um bei der Übergabe des anstehenden Momentes von der Synchronisierungseinrichtung auf das Losrad des zugeordneten Radsatzes den Aufbau von Differenzdrehzahlen zu verringern oder vollkommen zu verhindern.

Gemäß einem weiteren Ausführungsbeispiel wird bei dem eingangs genannten Verfahren ein und derselbe Antriebsstrang je nach Randbedingungen eines anstehenden Gangwechsels auf jeweils eine von drei möglichen Arten zum Durchführen eines Gangwechsels angesteuert, wobei die drei möglichen Arten von Gangwechseln bei geöffneter, bei geschlossener bzw. bei schlupfender Reibungskupplung erfolgen.

Gemäß dem weiteren Ausführungsbeispiel kann ein und derselbe Gangwechsel eines Antriebsstranges, je nach vorliegenden Randbedingungen, auf eine von drei unterschiedlichen Arten durchgeführt werden. Daher lassen sich je nach Randbedingung eher komfortable oder eher sportliche Schaltvorgänge durchführen.

Vorzugsweise ist bei dem Antriebsstrang zur Durchführung des erfindungsgemäßen Verfahrens wenigstens einer der zweiten Aktuatoren zur Ansteuerung von zwei Schaltkupplungen ausgelegt.

Durch diese Maßnahme verringert sich insgesamt der aktuatorische Aufwand für die Automatisierung des Antriebsstranges.

Dabei ist es bevorzugt, wenn die zwei Schaltkupplungen Gängen zugeordnet sind, die nicht benachbart sind.

Hierdurch wird mit anderen Worten erreicht, daß benachbarte Gänge durch unterschiedliche Aktuatoren betätigt werden und damit unabhängig voneinander ein- und ausgelegt werden können. Hierdurch wird eine größtmögliche Flexibilität bei der Steuerung der Aktuatoren des Stufengetriebes erzielt.

Besonders bevorzugt ist es dabei, wenn zwischen den zwei Gängen zwei weitere Gänge liegen.

Diese Maßnahme hat den Vorteil, daß immer zwei Gänge von einem Aktuator bedient werden, die in der Praxis niemals in Folge zu schalten sind. Da es sich vorliegend nicht um ein sequentielles Getriebe handelt, ist die Folge von Gängen bei Gangwechseln nicht auf benachbarte Gänge beschränkt. So ist es nicht nur bei Handschaltgetrieben sondern auch bei automatisierten Antriebssträngen generell möglich, einen Gangwechsel direkt von einem Gang in den übernächsten Gang durchzuführen, beispielsweise vom vierten Gang in den sechsten Gang. Durch die Maßnahme, daß zwischen den zwei Gängen, die von einem Aktuator bedient werden, zwei weitere Gänge liegen, sind Gangwechsel ohne Zugkraftunterbrechung nicht nur von einem Gang zum nächsten Gang sondern auch zum übernächsten Gang durchführbar. Allein Gangwechsel, die die zwei Schaltkupplungen betreffen, die von einem Aktuator bedient werden, können nicht nach dieser Schaltstrategie geschaltet werden, so daß hierbei eine Zugkraftunterbrechung auftreten wird. Es hat sich jedoch gezeigt, daß gerade Gangwechsel zum überübernächsten Gang vom Fahrer praktisch niemals gewünscht werden.

Besonders bevorzugt ist es, wenn das Stufengetriebe sechs Vorwärtsgänge und drei zweite Aktuatoren aufweist, wenn ferner alle drei zweiten Aktuatoren zur Ansteuerung von jeweils zwei Schaltkupplungen ausgelegt sind und wenn schließlich die jeweils zwei Schaltkupplungen jeweils zwei Gängen zugeordnet sind, die nicht benachbart sind.

Durch diese Maßnahme ist es möglich, wenigstens sämtliche Gangwechsel eines Sechsganggetriebes von einem Gang zum jeweils nächsten Gang mit Zugkraftunterstützung durchzuführen.

Besonders bevorzugt ist es dabei, wenn zwischen sämtlichen nicht benachbarten Gangpaaren jeweils genau zwei weitere Gänge liegen.

Aus den genannten Gründen ist dies vorteilhaft, da ein Fahrer in der Praxis niemals einen Gangwechsel von einem Gang zum überübernächsten Gang anfordern wird. Alle anderen Gangwechsel können mit Zugkraftunterstützung durchgeführt werden. Bei einem Getriebe mit genau sechs Gängen ergibt sich durch diese Vorschrift, daß die jeweils nicht benachbarten Gangpaare die Gänge eins, vier, die Gänge zwei, fünf und die Gänge drei, sechs sind.

Besonders bevorzugt ist es, wenn die Synchronisierungseinrichtung eine Kegelsynchronisierung aufweist.

Kegelsynchronisierungen sind bewährte Synchronisierungselemente, und es ist vergleichsweise einfach, solche Elemente so auszulegen, daß sie für den erfindungsgemäßen Antriebsstrang geeignet sind.

Dabei ist es besonders bevorzugt, wenn die Kegelsynchronisierung einen Mehrfachkonus aufweist.

Durch das Bereitstellen eines Mehrfachkonus kann die Schaltkraft der Synchronisierungseinrichtung insgesamt verringert werden. Der Synchronisierungsvorgang kann beschleunigt werden.

Es ist ferner bevorzugt, wenn die Kegelsynchronisierung einen Kegelwinkel von mehr als 6° aufweist.

Hierdurch läßt sich die Synchronisierungseinrichtung besser dosieren. Es kann keine Selbsthemmung auftreten.

Gemäß einer weiteren bevorzugten Ausführungsform weist die Synchronisierungseinrichtung eine Lamellensynchronisierung auf.

Lamellensynchronisierungen sind leicht ansteuerbar und gut dosierbar.

Ferner umfaßt die Schaltkupplung einer bevorzugten Ausführungsform eine asymmetrisch angespitzte Verzahnung an einer von dem Aktuator betätigbaren Schaltmuffe.

Hierdurch lassen sich Schaltmuffe und Kupplungskörper unter Last besser einfädeln.

Ferner ist es bevorzugt, wenn die Schaltkupplung eine hinterlegungsfreie Verzahnung an einer von dem Aktuator betätigbaren Schaltmuffe oder am Kupplungskörper aufweist.

Hierdurch läßt sich der mit dieser Schaltkupplung betätigbare Gang leichter auslegen.

Gemäß einer weiteren bevorzugten Ausführungsform weist die Schaltkupplung eine hinterlegte Verzahnung an ihrem Kupplungskörper oder an der Schaltmuffe auf.

Diese Maßnahme erschwert das Auslegen des Ganges unter Last nicht.

Ferner ist es von Vorteil, wenn für die Radsätze und die zugeordneten Schaltkupplungen eine Zentralschmierung vorgesehen ist.

Hierbei treten keine Panschverluste durch den Radsatz auf wie bei einer Tauchschmierung. Die Schaltelemente werden besser und sicherer mit Öl versorgt. Ferner ist durch die Zentralschmierung gewährleistet, daß die bei einem Synchronisierungsvorgang unter Last entstehende Wärme gut abtransportiert werden kann.

Weitere Vorteile und Merkmale ergeben sich aus der nachstehenden Beschreibung von bevorzugten Ausführungsformen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Getriebeschema eines automatisierten Antriebsstranges gemäß einer ersten Ausführungsform;
- Fig. 2: ein Getriebeschema eines automatisierten Antriebsstranges gemäß einer zweiten Ausführungsform;
- Fig. 3: Zeitablaufdiagramme bei einem exemplarischen Gangwechsel von eins nach zwei mittels des erfindungsgemäßen Verfahrens;
- Fig. 4: einen Vergleich eines Gangwechsels gemäß der Erfindung mit dem Stand der Technik in qualitativer Hinsicht;
- Fig. 5: ein Getriebeschema eines automatisierten Antriebsstranges gemäß einer dritten Ausführungsform;
- Fig. 6: ein Diagramm zur Darstellung der Kriterien, wann bestimmte Schaltstrategien angewandt werden;
- Fig. 7a bis 7d: Diagramme verschiedener Steuersignale zum Durchführen unterschiedlicher Schaltstrategien über der Zeit.

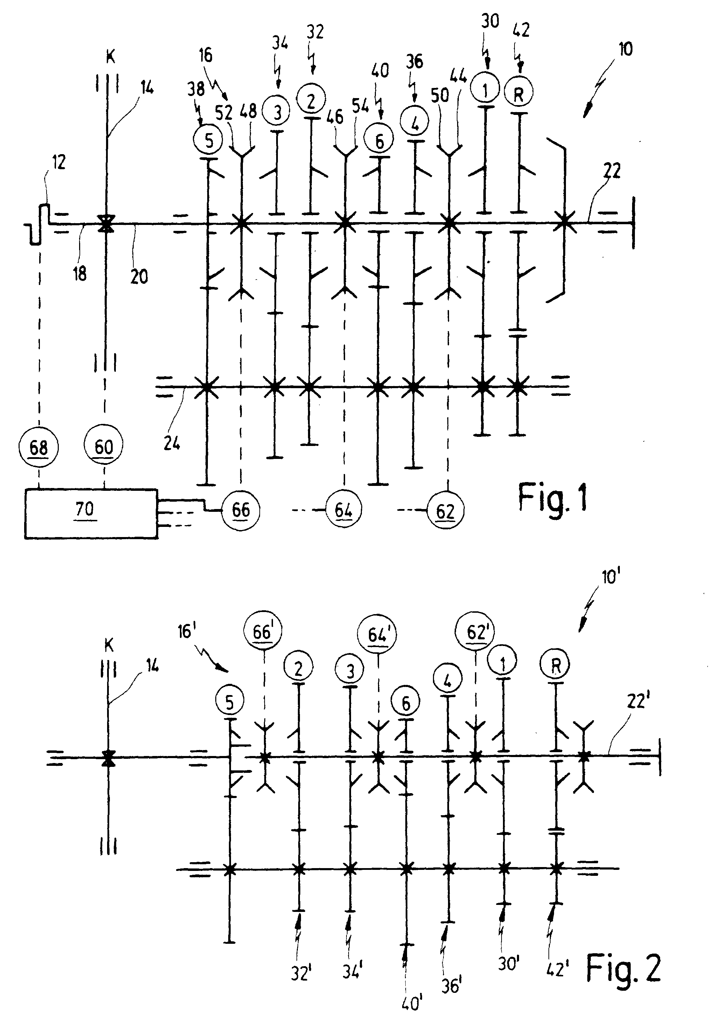

Ein Antriebsstrang für ein Personen-Kraftfahrzeug ist in Fig. 1 generell bei 10 gezeigt.

Der Antriebsstrang 10 umfaßt einen Antriebsmotor 12, insbesondere einen Verbrennungsmotor, eine als Trenn- und Anfahrkupplung ausgebildete einzelne Reibungskupplung 14 und ein Stufengetriebe 16.

Eine Motorabtriebswelle 18 ist mit einem nicht näher dargestellten Eingangsglied der Reibungskupplung 14 verbunden. Ein ebenfalls nicht näher dargestelltes Ausgangsglied der Reibungskupplung 14 ist mit einer Getriebeeingangswelle 20 verbunden.

Das Stufengetriebe 16 ist in Standardbauweise für den Längseinbau in einem Kraftfahrzeug ausgeführt und umfaßt eine konzentrisch mit der Getriebeeingangswelle 20 ausgerichtete Getriebeausgangswelle 22. Eine zu den Wellen 20, 22 parallele Vorgelegewelle ist bei 24 gezeigt.

Das Stufengetriebe 16 umfaßt sieben Radsätze 30, 32, 34, 36, 38, 40 bzw. 42 für Vorwärtsgänge eins bis sechs und einen Rückwärtsgang R.

Der Radsatz 38 für den fünften Gang ist die Konstante zwischen Getriebeeingangswelle 20 und Vorgelegewelle 24. Der fünfte Gang ist als direkter Gang ausgelegt, bei dem Getriebeeingangswelle 20 und Getriebeausgangswelle 22 direkt formschlüssig miteinander verbunden sind.

Auf der Getriebeausgangswelle 22 sind, ausgehend von dem Konstanten-Radsatz 38, die Losräder der Radsätze 34 für den dritten Gang, 32 für den zweiten Gang, 40 für den sechsten Gang, 36 für den vierten Gang, 30 für den ersten Gang und 42 für den Rückwärtsgang angeordnet. Die jeweils entsprechenden Festräder sind in der Fig. nicht näher bezeichnet; sie sind drehfest mit der Vorgelegewelle 24 verbunden.

Zum Schalten der Vorwärtsgänge eins bis sechs sind Schaltkupplungen 44, 46, 48, 50, 52 und 54 vorgesehen. Dabei sind, wie dem Getriebeschema in Fig. 1 zu entnehmen ist, jeweils zwei Schaltkupplungen paarweise zusammengefaßt, so daß sie, in jeweils entgegengesetzte Richtungen, mittels eines Aktuator pro Schaltkupplungspaar betätigt werden können.

Die Aktuatoren des automatisierten Antriebsstranges 10 umfassen einen ersten Aktuator 60 zur Betätigung der Reibungskupplung 14. Ferner sind drei zweite Aktuatoren 62, 64, 66 für das Stufengetriebe 16 vorgesehen. Ein dritter Aktuator 68 dient zur Beeinflussung des Motors 12.

Die insgesamt fünf Aktuatoren werden von einer zentralen Steuereinrichtung 70 angesteuert. Der Aktuator 62 dient zur Betätigung der Schaltkupplungen 44, 50 für den ersten bzw. den vierten Gang. Der Aktuator 64 dient zum Betätigen der Schaltkupplungen 46, 54 für den zweiten bzw. sechsten Gang. Der Aktuator 66 dient zum Betätigen der Schaltkupplungen 48, 52 für den dritten bzw. den direkten fünften Gang.

Es ist erkennbar, daß die Radsätze 30 bis 40 und die entsprechenden Schaltkupplungen 44 bis 54 so angeordnet sind, daß kein Aktuator 62, 64, 66 aufeinanderfolgende Gänge betätigt. Statt dessen betätigt der Aktuator 62 den ersten und den vierten Gang, der Aktuator 64 den zweiten und den sechsten Gang und der Aktuator 66 den dritten und den fünften Gang. Hierbei handelt es sich um solche Gangpaare, deren Wechsel in der Praxis vom Fahrer niemals angefordert wird. Mit anderen Worten, es ist in der Praxis nicht üblich, vom ersten in den vierten oder vom zweiten in den sechsten Gang zu schalten. Üblich sind hingegen Gangwechsel von einem zum nächsten Gang, also von eins nach zwei, von zwei nach drei usw.

Für diese Art von Gangwechseln ist die genannte Anordnung von Radsätzen und Schaltkupplungen besonders geeignet, wie nachstehend noch erläutert werden wird.

Einen alternative Form eines erfindungsgemäßen Antriebsstranges 10' ist in Fig. 2 dargestellt.

Der grundsätzliche Aufbau ist identisch zu dem des Antriebsstranges 10 der Fig. 1. Soweit in Fig. daher keine separaten Bezugsziffern vergeben sind, unterscheidet sich diese Ausführungsform nicht von der der Fig. 1.

Bei dem Stufengetriebe 16' des Antriebsstranges 10' sind auf der Getriebeausgangswelle 22', ausgehend von dem Konstanten-Radsatz 38' für den fünften Gang, die Losräder der Radsätze 32', 34', 40', 36', 30', 42' für die Gänge 2, 3, 6, 4, 1 bzw. R angeordnet. Die entsprechenden Festräder sind wiederum drehfest mit der Vorgelegewelle verbunden.

Man erkennt, daß im Grunde lediglich die Radsätze für den zweiten und den dritten Gang vertauscht worden sind, so daß ein Aktuator 64' nunmehr zum Einlegen des dritten oder des sechsten Ganges dient. Ein Aktuator 66' dient zum Einlegen des zweiten oder des fünften Ganges.

Diese Ausführungsform ist für alle Gangwechsel gut geeignet, mit der Ausnahme der Gangwechsel 1-4, 2-5, 3-6. Man erkennt, daß in der Praxis keiner dieser drei Gangwechsel eine Bedeutung hat, weder beim Hoch- noch beim Herunterschalten. In allen Fällen bedient ein Aktuator jeweils einen Gang und den überübernächsten Gang.

Die Schaltkupplungen 44 bis 54 sind bei sowohl dem Stufengetriebe 16 als auch dem Stufengetriebe 16' mit Kegel-Synchronisierungseinrichtungen ausgestattet. Obgleich dies in den Figuren nicht dargestellt ist, sind die Kegel-Synchronisierungseinrichtungen mit Mehrfachkonus und mit einem Kegelwinkel > 6,5° ausgeführt, um die Synchronisierungseinrichtungen besser dosieren zu können und um Selbsthemmungen zu vermeiden. Ferner ist in an sich üblicher Weise ein jedes Schaltkupplungspaar mit einer in Axialrichtung verschiebbaren Schaltmuffe versehen, die von einer Schaltgabel betätigt wird. Da die Synchronisierungseinrichtungen, wie nachfolgend beschrieben, höheren Schaltkräften ausgesetzt sind als bei herkömmlichen Stufengetrieben, sind verschleißoptimierte Mitnehmersteine vorgesehen. Ferner ist die schaltmuffenseitige Verzahnung der Schaltkupplungen jeweils asymmetrisch angespitzt, um ein besseres Einfädeln von Schaltmuffe und Kupplungskörper unter Last zu erzielen. Um ein leichteres Gangauslegen auch unter Last zu erreichen, ist die Verzahnung der Schaltmuffen ohne Hinterlegung ausgebildet, mit parallelen Zähnen. Andererseits sind die Kupplungskörper der jeweiligen Synchronisierungseinrichtungen mit hinterlegten Verzahnungen ausgestattet. Umgekehrt kann die Verzahnung der Schaltmuffen hinterlegt sein, und die Kupplungskörper sind dann ohne hinterlegte Verzahnungen ausgebildet.

Die Aktuatoren 60, 62, 64 und 66 können elektromechanische, hydraulische oder pneumatische Aktuatoren sein. Elektromechanische Aktuatoren sind jedoch bevorzugt.

Anstelle der Ausbildung der Synchronisierungseinrichtungen als Kegel-Synchronisierungseinrichtungen sind alternativ auch Lamellen-Synchronisierungseinrichtungen möglich.

Ferner sind die Stufengetriebe 16, 16' jeweils mit (nicht dargestellten) Zentralschmierungsmitteln für die Radsätze und die Schaltelemente der Schaltkupplungen versehen, wodurch Panschverluste durch die Radsätze wie bei einer Tauchschmierung vermieden werden. Ferner werden die Schaltelemente besser und sicherer mit Öl versorgt. Von ganz entscheidender Bedeutung ist darüber hinaus, daß die sich bei einem Synchronisierungsvorgang unter Teillast entwickelnde Wärme effizient abgeführt werden kann. Die Zentralschmierung kann in an sich bekannter Weise durch eine mechanisch oder elektrisch angetriebene Pumpe versorgt werden.

Wie sich bereits aus dem oben Gesagten ergibt, sind die Schaltkupplungen 44 bis 54 formschlüssige Schaltkupplungen, die im geschalteten Zustand keine Hilfsenergie benötigen.

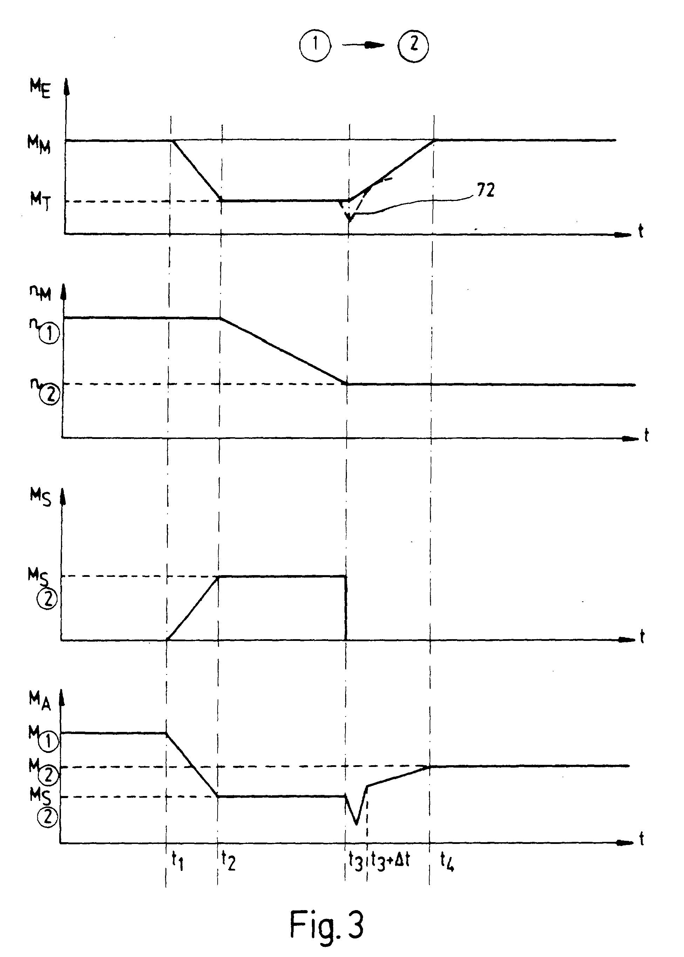

Nachfolgend wird die Betriebsweise der Antriebsstränge 10, 10' der Fig. 1 und 2 unter Bezugnahme auf Fig. 3 erläutert.

In Fig. 3 sind vier Zeitablaufdiagramme untereinander dargestellt. Das oberste Zeitablaufdiagramm zeigt das getriebeeingangsseitig anstehende Moment M_{E}. Darunter ist die Drehzahl n_{M} der Motorabtriebswelle 18 dargestellt. Darunter ist das sogenannte Synchronisierungsmoment M_{S} dargestellt, das an der Synchronisierungseinrichtung der Schaltkupplung des einzulegenden Ganges übernommen wird.

In Fig. 3 ganz unten ist schließlich das getriebeausgangsseitig anstehende Abtriebsmoment M_{A} dargestellt. Fig. 3 betrifft einen Gangwechsel von eins nach zwei. Die folgende Erläuterung eines solchen Gangwechsels mit den Antriebssträngen 10, 10' ist jedoch gleichermaßen auf alle anderen Hochschaltvorgänge, aber auch auf Herunterschaltvorgänge anwendbar.

Bis zum Zeitpunkt t₁ fährt das Fahrzeug mit eingelegtem ersten Gang und bei geschlossener Reibungskupplung 14. Folglich steht getriebeeingangsseitig das volle Motormoment M_{M} an, bei einer Drehzahl von n₁.

Ein folgender Gangwechselbefehl zum Auslegen des ersten und zum Einlegen des zweiten Ganges kann beispielsweise manuell von einem Fahrer mittels einer Tasten- oder Schaltstockbetätigung erfolgen, wobei diese mechanischen Vorgänge in ein elektrisches Anforderungssignal umgesetzt werden. Ein solches Anforderungssignal kann jedoch auch von einer Steuereinrichtung 70 erzeugt werden, die beispielsweise erkennt, daß aufgrund bestehender Fahrzeugparameter und einer bestimmten Gaspedalstellung nunmehr ein Gangwechsel erforderlich ist.

Wenn nun zum Zeitpunkt t₁ ein solches Anforderungssignal einen Gangwechsel in den zweiten Gang einleitet, erfolgen bis zum Zeitpunkt t₂ parallel die folgenden Vorgänge. Zum einen wird der Aktuator 64 bei dem Antriebsstrang 10 (der Aktuator 66' bei dem Antriebsstrang 10') angesteuert, um die Synchronisierungseinrichtung der Schaltkupplung 46 für den zweiten Gang zu belasten. Dabei übernimmt die Synchronisierungseinrichtung der Schaltkupplung 46 des zweiten Ganges allmählich ein Synchronmoment M_{S}. Gleichzeitig wird das getriebeeingangsseitig anstehende Moment M_{E} verringert, entweder durch gezielten Eingriff in die Motorelektronik des Motors 12 mittels des Aktuators 68 und/oder durch teilweises Öffnen der Reibungskupplung 14 mittels des Aktuators 60. Daher fällt das Moment M_{E} bis zum Zeitpunkt t₂ ab, jedoch nicht bis 0, so daß die Reibungskupplung 14 nicht vollständig geöffnet wird.

Parallel zu diesen Vorgängen wird, was in Fig. 3 nicht näher dargestellt ist, der Aktuator 62 vorgespannt, d.h. es wird auf die Schaltkupplung 44 für den ersten Gang eine Kraft in Richtung Auslegen des ersten Ganges ausgeübt. Da in der Zeitspanne zwischen t₁ und t₂ über die Schaltkupplung 44 des ersten Ganges immer noch ein gewisser Teil des anstehenden Momentes M_{E} übertragen wird, führt dieses Vorspannen des zugeordneten Aktuators 62 in Auslegerichtung nicht sofort dazu, daß der erste Gang ausgelegt wird. Erst dann, wenn das anstehende Moment M_{E} nahezu vollständig von der Synchroneinheit der Schaltkupplung 46 des zweiten Ganges übernommen worden ist (t₂), "flutscht" der erste Gang aufgrund der Vorspannung des Aktuators 62 heraus.

In der Phase zwischen t₂ und t₃ erfolgt eine Synchronisierung mittels der Synchronisierungseinrichtung der Schaltkupplung 46 des zweiten Ganges. Dieser Synchronisierungsvorgang erfolgt unter Teillast, denn getriebeeingangsseitig steht während dieser Zeitspanne ein zwar verringertes, aber nicht auf null absinkendes Teillastmoment M_{T} an.

Zum Zeitpunkt t₃ ist die Synchrondrehzahl für den zweiten Gang erreicht. Nunmehr wird unter (Teil-)Last die zugeordnete Schaltmuffe durchgeschaltet, die Schaltmuffe verläßt also den Synchronkörper und stellt den Formschluß mit dem Kupplungskörper des zweiten Ganges her. Dieser Vorgang erfolgt zwar außerordentlich schnell in einer Zeitspanne, die bei Δt gezeigt ist. Um jedoch zu vermeiden, daß die erreichte Synchronisierung in dieser Zeitspanne wieder verlorengeht, sich also zwischen den zu synchronisierenden Elementen wieder eine Differenzdrehzahl aufbaut, kann man das getriebeeingangsseitig anstehende Moment kurzfristig noch etwas weiter herunterregeln. Dies erfolgt entweder durch entsprechende Beeinflussung des Aktuators 60, um die Reibungskupplung 14 weiter zu öffnen, oder durch gezielten Eingriff in das Motormanagement mittels Aktuator 68. Dieser kurze Einbruch des getriebeeingangsseitigen Momentes M_{E} ist in Fig. 3 bei 72 dargestellt.

Auf eine solche Maßnahme kann gegebenenfalls verzichtet werden, wenn auf sonstige Weise gewährleistet wird, daß beim Durchschalten ein sicheres und komfortables Einspuren der Schaltkupplung des einzulegenden (hier zweiten) Ganges gewährleistet ist, beispielsweise durch asymmetrisches Anspitzen der Verzahnung der Schaltmuffe.

Zum Zeitpunkt t₃ plus Δt ist der zweite Gang formschlüssig eingelegt. Nunmehr kann die Reibungskupplung 14 wieder vollständig geschlossen werden, so daß ab t₄ getriebeeingangsseitig das volle Motormoment M_{M} ansteht.

Beim nächsten Gangwechsel vom zweiten in den dritten Gang wird der Aktuator 64 (66' bei 10') in Auslegerichtung vorgespannt, und der Aktuator 66 (64' bei 10') wird beaufschlagt, um die Synchronisierungseinrichtung der Schaltkupplung 48 des dritten Ganges zu betätigen.

Da zwischen t₁ und t₂ die Synchronisierungseinrichtung des einzulegenden Ganges betätigt wird, während der auszulegende Gang noch eingelegt ist, also immer im Schlupfbetrieb gearbeitet wird, kann man hierbei auch von einem "Ansynchronisieren" sprechen. Es versteht sich, daß dieses Ansynchronisieren nur mittels einer Synchronisierungseinrichtung erfolgen kann, die nicht durch den Aktuator des auszulegenden Ganges betätigt wird. Daher versteht sich auch, daß zusätzlich zu der Ansynchronisierung durch die Synchronisierungseinrichtung des einzulegenden Ganges eine parallele weitere Ansynchronisierung durch die Synchronisierungseinrichtung eines weiteren Ganges erfolgen kann, sofern der zugeordnete Aktuator weder dem einzulegenden noch dem auszulegenden Gang zugeordnet ist.

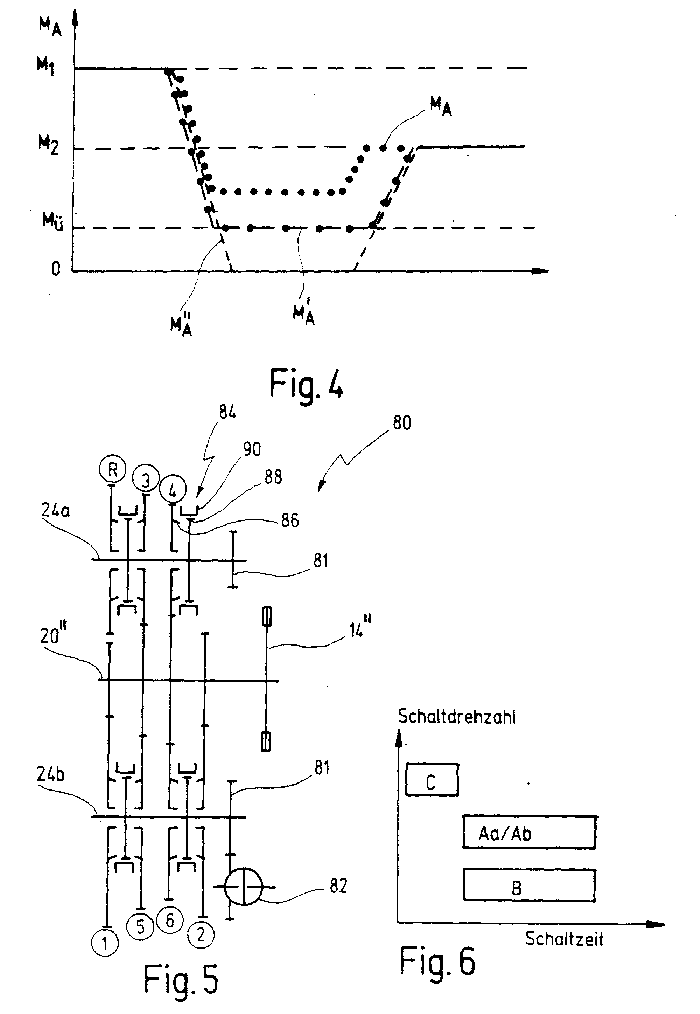

Ein Vergleich der erfindungsgemäßen Schaltstrategie mit dem Stand der Technik ist in qualitativer Hinsicht in Fig. 4 gezeigt.

So ist bei MA" ein ganz herkömmlicher Schaltvorgang mit einem automatisierten Antriebsstrang gezeigt, bei dem vor dem Auslegen des einen Ganges die zentrale Trenn-Reibungskupplung 14 geöffnet wird, so daß das getriebeeingangsseitig anstehende Moment und damit die Zugkraft des Fahrzeuges auf null einbricht. Erst wenn der neue Gang eingelegt ist, wird die Reibungskupplung 14 wieder geöffnet, so daß wieder ein Moment ansteht. Getriebeausgangsseitig steht also bis zum Öffnen der Trennkupplung das Moment M₁ des beispielsweise ersten Ganges an. Nach dem Gangwechsel und dem erneuten Schließen der Reibungskupplung steht das Moment M₂ des zweiten Ganges an.

Bei einem automatisierten Antriebsstrang mit Zugkraftunterstützung über einen parallelen Zweig, beispielsweise mit dem höchsten Gang, fällt in dem genannten Zeitraum das Abtriebsmoment M_{A} nicht auf null ab, sondern es wird für diesen Zeitraum ein Überbrückungsmoment M_{Ü} eines anderen Ganges, beispielsweise das Moment des sechsten Ganges, übertragen. Dies ist bei M_{A}' gezeigt.

Bei der Erfindung, die bei M_{A} gezeigt ist, kann während des Gangwechsels im Überbrückungszeitraum nicht nur ein höheres Moment übertragen werden, der Gangwechsel kann auch schneller erfolgen, da viel weniger Elemente zu betätigen sind, und daher viel weniger Schaltnebenzeiten auftreten.

Aus dem Vorgesagten ergibt sich, daß die Schaltkupplungen einschließlich der Synchronisierungseinrichtungen jeweils als Teillastschaltelemente ausgebildet sein müssen. Da der Antriebsstrang während des Schaltvorganges immer unter (Teil-) Last bleibt, tritt kein Entspannungsschlag auf, d.h. es ergibt sich ein verbessertes Schwingungs- und Geräuschverhalten. Da die Schaltkupplungen formschlüssig ausgebildet sind, ist im geschalteten Zustand keine Hilfsenergie erforderlich.

Es versteht sich, daß die asymmetrische Anspitzung der Schaltmuffenverzahnung dazu führt, daß diese nur in einer Drehrichtung, also vorzugsweise bei Hochschaltungen wirkt. Daher sollte die asymmetrische Anspitzung auch auf jene Gänge beschränkt werden, bei denen die größten Drehmomentsprünge zu erwarten sind, also auf den zweiten und auf den dritten Gang.

Das zu übertragende Drehmoment kann während des Gangwechsels über eine Modulation der Reibungskupplung 14 beeinflußt werden. Bei Hochschaltungen kann die kinetische Rotationsenergie des Motors für den Vortrieb ausgenutzt werden.

Fig. 5 stellt eine dritte Ausführungsform eines erfindungsgemäßen Antriebsstranges dar, der insgesamt mit 80 bezeichnet ist.

Der Antriebsstrang 80 ist ein 6-Ganggetriebe in 3-Wellenbauweise für den Quereinbau in einem Personen-Kraftfahrzeug.

Der Aufbau des Antriebsstranges 80 enthält eine Getriebeeingangswelle 20'', die mittels einer einzelnen als Reibungstrockenkupplung ausgebildeten Anfahr- und Trennkupplung 14'' mit einem nicht näher dargestellten Motor des Pkw verbindbar ist. Der Antriebsstrang 80 weist ferner zwei Vorgelegewellen 24a, 24b auf. An der Vorgelegewelle 24a sind die Losräder der Radsätze für den Rückwärtsgang, den dritten Gang und den vierten Gang angeordnet. An der Vorgelegewelle 24b sind die Losräder der Radsätze der Gänge 1, 5, 6 und 2 angeordnet. Die Vorgelegewellen 24a, 24b sind über einen Abtriebsradsatz 81 mit einem schematisch angedeuteten Differential 82 verbunden.

Dem Radsatz für den vierten Gang ist ein eigener Aktuator 84 zugeordnet. Die Gänge 1 und 5, 2 und 6 sowie 3 und R werden paarweise jeweils mittels eines Aktuators geschaltet. Jeder der Aktuatoren ist aufgebaut wie der Aktuator 84 für den vierten Gang und umfaßt eine Synchronisierungseinrichtung in Form einer kegeligen Reibeinrichtung 86 und eine Formschlußkupplung 88, die mittels einer Schaltmuffe 90 betätigbar sind.

Unter einer Synchronisierungseinrichtung wird im vorliegenden Zusammenhang jede Art von Reibeinrichtung verstanden, die dazu in der Lage ist, im schlupfenden Zustand ein Drehmoment zu übertragen. Ferner soll die Synchronisierungseinrichtung ihrem Namen gemäß zur Angleichung von Drehzahlen geeignet sein. Es ist jedoch nicht notwendig, daß die Synchronisierungseinrichtungen einen vollkommenen Gleichlauf herstellen. Vielmehr kann es unter gewissen Voraussetzungen sogar sinnvoll sein, die Synchronisierungseinrichtungen so auszulegen, daß ein Schalten der Formschlußkupplung 88 auch dann möglich ist, wenn noch eine gewisse Differenzdrehzahl vorhanden ist.

Eine Synchronisierungseinrichtung im Sinne der vorliegenden Erfindung, sei es die Synchronisierungseinrichtung 86 der Schaltkupplung 84 oder eine der Synchronisierungseinrichtungen der Schaltkupplungen 44 bis 54 des Antriebsstranges 10 der Fig. 1, ist dazu ausgelegt, einen Vorgang der Drehzahlangleichung im Schlupfbetrieb unter Teillast durchzuführen. Unter Teillastfähigkeit ist im vorliegenden Zusammenhang zu verstehen, daß die Synchronisierungseinrichtung im Schlupfbetrieb nicht das volle maximale Motormoment, multipliziert mit dem Übersetzungsverhältnis des jeweiligen Ganges, übertragen kann, sondern allenfalls 75 % hiervon. Ein Wert von 75 % wird dabei in der Regel eher für kleinere Personenkraftwagen erzielbar sein, deren Motoren nur ein vergleichsweise geringes Drehmoment erzeugen können. Bei einer Anwendung in drehmomentstärkeren Fahrzeugen kann dieser Prozentsatz auch darunter liegen, z.B. 50 % oder sogar nur 30 %.

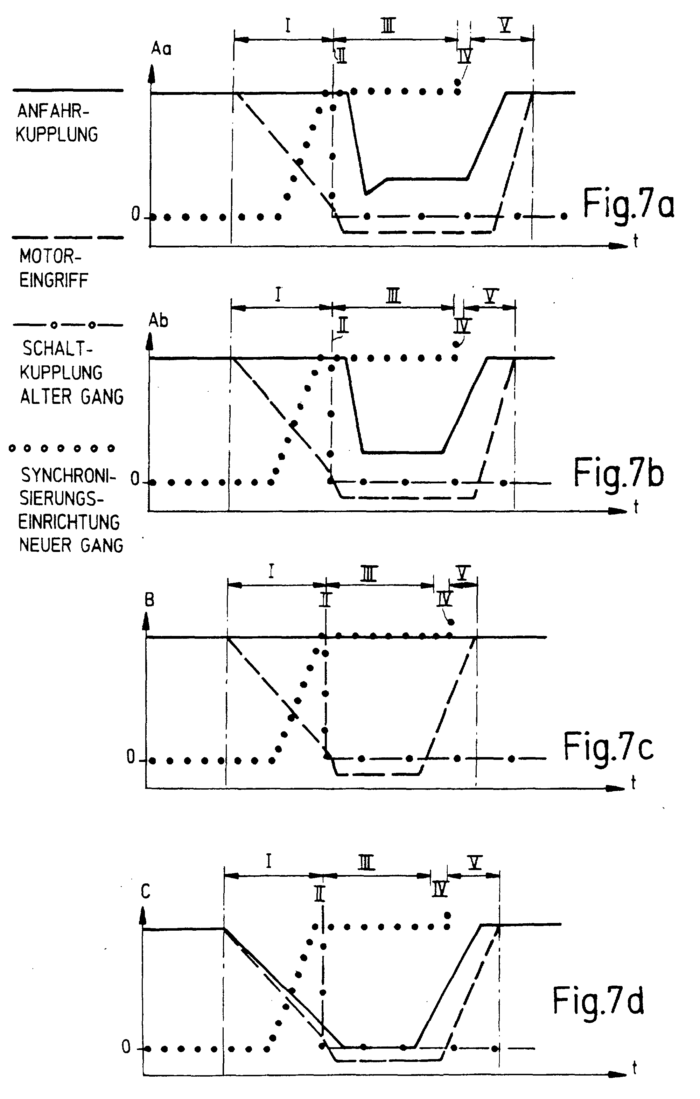

Fig. 6 ist ein Diagramm einer Schaltdrehzahl über der Schaltzeit. Unter Schaltdrehzahl wird die Drehzahl des Motors des Kraftfahrzeuges verstanden, die bei Einleiten eines Schaltvorganges vorliegt. Als Schaltdrehzahl kann jedoch alternativ auch eine Differenzdrehzahl zwischen den Elementen (Losrad und Welle), die bei einem Gangwechsel formschlüssig miteinander zu verbinden sind, verstanden werden. Die Schaltzeit ist jene Zeitspanne, die vom Erfassen einer Schaltanforderung bis zum Erreichen des Zustandes verstreicht, bei dem der neue Gang eingelegt und die Anfahr- bzw. Reibungstrennkupplung vollständig geschlossen ist.

In das Diagramm der Fig. 6 sind drei Bereiche eingetragen, die jeweils bestimmte Schaltstrategien darstellen, denen bestimmte Schaltzeiten bzw. Schaltdrehzahlen zugeordnet sind. Die Schaltzeit und die Schaltdrehzahl stellen für einen Gangwechsel Randbedingungen dar.

Die Schaltstrategie B stellt ein Schalten mit geschlossener Anfahrkupplung bei niedrigen Schaltdrehzahlen dar. Die Schaltstrategie C schließlich stellt ein Schalten mit geöffneter Anfahrkupplung bei hohen Schaltdrehzahlen dar. Die Schaltstrategie A (einschließlich Aa und Ab) findet Anwendung bei mittleren Schaltdrehzahlen bei schlupfender Anfahrkupplung.

Während mit den Schaltstrategien A und B komfortable Schaltungen mit Schaltzeiten im Bereich von 500 bis 1.000 msec erreicht werden sollen, ist das Ziel der Schaltstrategie C ein sportliches Schalten mit Schaltzeiten < 200 msec.

In den Fig. 7a bis 7d ist der Phasenablauf der Schaltstrategien Aa, Ab, B bzw. C in qualitativer Hinsicht dargestellt. In Fig. 7 bezeichnen die durchgezogenen Linien die Steuersignale der Anfahr- bzw. Reibungstrennkupplung. Die gestrichelten Verläufe stellen die Steuersignale für den Motoreingriff dar und repräsentieren im wesentlichen das getriebeeingangsseitig anstehende Drehmoment. Die Strich-Punkt-Linien stellen die Steuersignale der Schaltkupplung des alten bzw. auszulegenden Ganges dar. Die Punkt-Linie schließlich stellt das Steuersignal der Synchronisierungseinrichtung des neuen bzw. einzulegenden Ganges dar.

In Fig. 7 ist jeweils für die Steuersignale annähernd eine Null-Linie angedeutet. Aus Darstellungsgründen ist das Steuersignal für den Motoreingriff teilweise unter der Null-Linie gezeigt.

Im folgenden wird zunächst die Phaseneinteilung der Schaltstrategie Aa erläutert. Zu Anfang ist die Anfahrkupplung geschlossen, der alte Gang ist eingelegt, und die Synchronisierungseinrichtung des neuen Ganges ist unbelastet. In der Phase I findet ein Abbau des Motormomentes statt. Durch Betätigen der Synchronisierungseinrichtung des einzulegenden Ganges erfolgt eine Momentenübernahme, was zu einer Entlastung des auszulegenden Ganges führt. Zu Ende der Phase I ist das Moment an der Synchronisierungseinrichtung idealerweise gleich dem Motormoment (unter Berücksichtigung der Übersetzungen). Bei einer teillastschaltfähigen Synchronisierungseinrichtung liegt das Moment darunter.

In der Phase II wird der alte Gang ausgelegt, da er nahezu oder vollständig momentenfrei ist. Es wird eine Drehzahlangleichung am einzulegenden Gang eingeleitet. Dabei bleibt das Moment an der Synchronisierungseinrichtung konstant, das Motormoment ist weiter rückläufig. Die Differenzdrehzahl an der Synchronisierungseinrichtung wird reduziert. Die Antriebswellenzahl kann wegen des Momentenüberschusses an der Synchronisierungseinrichtung nicht ausbrechen.

In der Phase III wird am einzulegenden Gang der Gleichlauf hergestellt. Zur Unterstützung des Drehzahlangleichs wird die Anfahrkupplung schlupfend betätigt. Dabei werden die Differenzdrehzahl und der Differenzdrehzahlgradient durch Betätigen der Anfahrkupplung, also durch eine Variation des Schlupfmomentes, gesteuert und geregelt.

In der Phase IV ist die Drehzahl am einzulegenden Gang im Zielfenster (eine Differenzdrehzahl ist im allgemeinen zulässig, im Grenzfall beträgt die Differenzdrehzahl 0). Der neue Gang wird eingelegt. In der Phase V schließlich erfolgt ein Schließen der Anfahrkupplung und Synchronisieren des Motors.

Ziel der Strategie Aa ist es, den Drehzahlangleich an der Synchronisierungseinrichtung über Schlupf in der Anfahrkupplung so zu steuern und zu regeln, daß die Differenzdrehzahl mit einem möglichst flachen Gradienten gegen null einläuft. Hierdurch soll ein ruckfreier Übergang in die Haftphase erreicht werden.

Die Schaltstrategie Ab verläuft hinsichtlich der Phasen I, II, IV und V identisch wie bei der Schaltstrategie Aa. In der Phase III wird die Anfahrkupplung zur Unterstützung des Drehzahlangleichs betätigt und auf ein definiertes Schlupfmoment gesteuert. Noch vor Erreichen des Formschlusses am einzulegenden Gang, also vor der Phase IV, wird die Anfahrkupplung wieder allmählich geschlossen. Durch Erhöhung des Schlupfmomentes wird im Idealfall der Momenteneinbruch beim Übergang in die Haftphase der Reibeinrichtung eliminiert.

Bei der Strategie Ab wird zur Reduzierung des Steuerungs- und Regelungsaufwandes beim Angleichen der Differenzdrehzahl an der Synchronisierungseinrichtung ein Schlupfmoment eingestellt, das auf jeden Fall einen zügigen Drehzahlangleich ermöglicht. Hierdurch wird die Haftphase mit einem vergleichsweise steilen Gradienten erreicht, was zu einem Ruck des Fahrzeugs führen könnte. Durch eine noch in der Phase III vorgenommene Erhöhung des Schlupfmomentes, gegebenenfalls rein durch Steuerung, nicht durch eine Regelung, in der Anfahrkupplung kann dieser Momentenstoß reduziert werden.

Bei der Schaltstrategie A (also bei Aa und Ab) wird zwischen der Anfahrkupplung und der Synchronisierungseinrichtung eine Momentendifferenz eingestellt. Der Momentenüberschuß in der Synchronisierungseinrichtung wird dazu benutzt, die Drehzahl der an- und abtriebsseitigen Massen anzugleichen.

Im folgenden wird der Ablauf eines Gangwechsels unter der Schaltstrategie B anhand von Fig. 7c erläutert. Im Unterschied zu der Schaltstrategie A wird die Anfahrkupplung bei der Strategie B überhaupt nicht betätigt. Ansonsten ist der Ablauf ähnlich wie bei der Schaltstrategie Aa, und es werden im folgenden nur kurz die Unterschiede hierzu erläutert. So kann es in der Phase II zweckmäßig sein, das Motormoment bereits auf den Minimalwert herunterzusteuern oder zu regeln. In der Phase III wird durch Erhöhung des Motormomentes ein Momenteneinbruch beim Übergang in die Haftphase der Synchronisierungseinrichtung im Idealfall eliminiert.

Der steuertechnische Aufwand bei der Strategie B ist im Vergleich zur Strategie A wesentlich geringer, da nur die Synchronisierungseinrichtung angesteuert wird. Ferner ist die Empfindlichkeit des Systems auf Abweichungen des Drehmomentes an der Synchronisierungseinrichtung geringer als bei der Strategie A, da die zu synchronisierenden Massen größer sind. Allerdings können etwas längere Synchronzeiten auftreten. Ferner kann der Energieeintrag in die Synchronisierungseinrichtung höher sein.

Im folgenden wird der Ablauf eines Gangwechsels mittels der Strategie C anhand von Fig. 7d erläutert.

In der Phase I erfolgt ein simultanes oder zeitlich leicht versetztes Öffnen der Anfahrkupplung und ein Abbau des Motormomentes. In Überschneidung hierzu findet eine Momentenübernahme am einzulegenden Gang durch Betätigen der Synchronisierungseinrichtung statt, was zu einer Entlastung des Startganges führt. Zu Ende der Phase I ist das Moment an der Synchronisierungseinrichtung in etwa gleich dem Motormoment (unter Berücksichtigung der Übersetzungen). Hierzu gilt das gleiche wie oben zur Phase I der Strategie Aa gesagt.

In der Phase II der Strategie C wird der alte Gang ausgelegt, da er nahezu oder vollständig momentenfrei ist. Es findet ein Drehzahlangleich am einzulegenden Gang statt. Das Moment an der Synchronisierungseinrichtung bleibt konstant, und die Differenzdrehzahl wird reduziert.

In der Phase III wird weiter der Gleichlauf am einzulegenden Gang hergestellt, die Anfahrkupplung wird zunächst vollständig geöffnet. Gegen Ende der Phase III, noch vor Erreichen des Formschlusses am einzulegenden Gang, wird die Anfahrkupplung allmählich wieder geschlossen. Durch Erhöhung des Schlupfmomentes wird hierdurch im Idealfall der Momenteneinbruch beim Übergang in die Haftphase der Synchronisierungseinrichtung eliminiert.

In der Phase IV befindet sich die Drehzahl am einzulegenden Gang im Zielfenster (eine Differenzdrehzahl ist zulässig, im Grenzfall Differenzdrehzahl "0"). Der neue Gang wird eingelegt.

Im Anschluß hieran wird die Anfahrkupplung vollständig geschlossen, und der Motor wird synchronisiert.

Die Schaltstrategie C wird für sportliche Schaltungen und/oder für einen "Kickdown" verwendet. Durch niedrige zu synchronisierende Massen und überschneidendes Schalten können kurze Schaltzeiten realisiert werden. Aufgrund der abschnittsweise innerhalb der Phase III vollkommen geöffneten Anfahrkupplung erfolgt eine Zugkraftunterbrechung. Diese kann jedoch außerordentlich kurz gehalten werden.

Durch die Möglichkeit, mit einem Antriebsstrang die drei grundsätzlich unterschiedlichen Schaltstrategien anwenden zu können, je nach vorherrschenden Randbedingungen, kann ein außerordentlich flexibles und gegebenenfalls adaptives Verhalten erzeugt werden.

Es versteht sich, daß die Erfindung auch auf Getriebe mit mehr oder weniger als sechs Vorwärtsgängen anwendbar ist. Ferner ist sie genauso auf Getriebe anwendbar, die für den Quereinbau ausgelegt sind.

## Patentansprüche

1. Verfahren zum Steuern eines Antriebsstranges eines Kraftfahrzeuges, der eine einzelne Reibungskupplung (14), die mittels eines ersten Aktuators (60) betätigt wird und eingangsseitig mit einem Motor (12) des Kraftfahrzeugs verbunden ist, und ein Stufengetriebe (16) aufweist, das mit der Ausgangsseite der Reibungskupplung (14) verbunden ist und das eine erste Mehrzahl von Radsätzen (30 - 40) zum Ein- und Auslegen von entsprechenden Vorwärtsgängen (1 bis 6) und eine entsprechende Mehrzahl von formschlüssigen Schaltkupplungen (44 - 54) aufweist, die jeweils eine eigene Synchronisierungseinrichtung aufweisen und die mittels einer zweiten Mehrzahl von zweiten Aktuatoren (62, 64, 66; 62', 64', 66') zum Ein- und Auslegen der Gänge (1 bis 6) betätigt werden, wobei bei einem Gangwechsel der erste Aktuator (60) und zweite Aktuatoren (62, 64, 66 62', 64', 66') zueinander koordiniert angesteuert werden,
**dadurch gekennzeichnet, daß**
die Synchronisierungseinrichtungen für einen Synchronisierungsvorgang unter Teillast geeignet sind und daß die Aktuatoren (60 - 66; 62', 64', 66') so angesteuert werden, daß die Reibungskupplung (14) bei wenigstens einer Art (A; B) von Gangwechsel nicht vollständig geöffnet wird, bei dem vor dem Auslegen des noch eingelegten Ganges (z.B. 1) eine Synchronisierungseinrichtung des einzulegenden Ganges (z.B. 2) schlupfend betätigt wird, um das getriebeeingangsseitig anstehende Moment (M_{M}) zu übernehmen.

2. Verfahren nach Anspruch 1, **dadurch gekennzeichnet, daß** bei dem Gangwechsel vor dem Auslegen des eingelegten Ganges (z.B. 1) die zugeordnete Schaltkupplung (z.B. 44) in Auslegerichtung vorgespannt wird.

3. Verfahren nach Anspruch 1 oder 2, **dadurch gekennzeichnet, daß** bei dem Gangwechsel (A; B) die Reibungskupplung (14) teilweise geöffnet und/oder das von dem Motor (12) bereitgestellte Moment (M_{M}) mittels eines Motoraktuators (68) verringert wird.

4. Verfahren nach Anspruch 3, **dadurch gekennzeichnet, daß** nach dem Auslegen des zuvor eingelegten Ganges (z.B. 1), nach dem Erreichen der Synchrondrehzahl und während des Einlegens des einzulegenden Ganges (z.B. 2) das an dem Stufengetriebe (16) anstehende Moment kurzzeitig (Δt) verringert wird, um bei der Übergabe des anstehenden Momentes von der Synchronisierungseinrichtung auf das Losrad des zugeordneten Radsatzes (z.B. 32) den Aufbau von Differenzdrehzahlen zu verringern.

5. Verfahren nach Anspruch 1, **dadurch gekennzeichnet, daß** ein und derselbe Antriebsstrang je nach Randbedingungen eines anstehenden Gangwechsels auf jeweils eine von drei möglichen Arten (A, B, C) zum Durchführen eines Gangwechsels angesteuert wird, wobei die drei möglichen Arten (A, B, C) von Gangwechseln bei geöffneter (C), bei geschlossener (B) bzw. bei schlupfender (A) Reibungskupplung (14) erfolgen.

6. Automatisierter Antriebsstrang eines Kraftfahrzeuges zur Durchführung des Verfahrens nach einem der Ansprüche 1 bis 5, mit:
einer einzelnen Reibungskupplung (14), die mittels eines ersten Aktuators (60) betätigbar und eingangsseitig mit einem Motor (12) des Kraftfahrzeugs verbunden ist,
einem Stufengetriebe (16), das mit der Ausgangsseite der Reibungskupplung (14) verbunden ist und das eine erste Mehrzahl von Radsätzen (30 - 40; 30 '- 40') zum Ein- und Auslegen von entsprechenden Vorwärtsgängen (1 bis 6) und eine entsprechende Mehrzahl von formschlüssigen Schaltkupplungen (44 - 54) aufweist, die jeweils eine eigene Synchronisierungseinrichtung aufweisen und die mittels einer zweiten Mehrzahl von zweiten Aktuatoren (62, 64, 66; 62', 64', 66') zum Ein- und Auslegen der Gänge (1 - 6) betätigbar sind, und
einer Steuereinrichtung (70), die den ersten Aktuator (60) und die zweiten Aktuatoren (62, 64, 66; 62', 64', 66') zueinander koordiniert ansteuert,
**dadurch gekennzeichnet, daß**
die Schaltkupplungen (44-54) so ausgelegt sind und die Steuereinrichtung (70) die Aktuatoren (60 - 66; 62', 64', 66') so ansteuert, daß wenigstens ein Gangwechsel erfolgt, ohne die Reibungskupplung (14) vollständig zu öffnen.

7. Antriebsstrang nach Anspruch 6, **dadurch gekennzeichnet, daß** wenigstens einer der zweiten Aktuatoren (62, 64, 66'; 62',64', 66') zur Ansteuerung von zwei Schaltkupplungen (44, 50 bzw. 46, 54 bzw. 48, 52) ausgelegt ist, daß die zwei Schaltkupplungen (44, 50 bzw. 46, 54 bzw. 48, 52) Gängen (1, 4 bzw. 2, 6 bzw. 3, 5) zugeordnet sind, die nicht benachbart sind, und daß daß zwischen den zwei Gängen (1-4, 2-5, 3-6; 1-5, 2-6) zwei weitere Gänge (2-3, 3-4, 4-5; 1-4, 3-5) liegen.

8. Antriebsstrang nach Anspruch 6 oder 7, **dadurch gekennzeichnet, daß** die Synchronisierungseinrichtung eine Kegelsynchronisierung aufweist, die einen Kegelwinkel von mehr als 6° aufweist.

9. Antriebsstrang nach Anspruch 6 oder 7, **dadurch gekennzeichnet, daß** die Synchronisierungseinrichtung eine Lamellensynchronisierung aufweist.

10. Antriebsstrang nach einem der Ansprüche 6 - 9, **dadurch gekennzeichnet, daß** die Schaltkupplung eine asymmetrisch angespitzte Verzahnung an einer von dem Aktuator betätigbaren Schaltmuffe aufweist.

11. Antriebsstrang nach einem der Ansprüche 6 - 10, **dadurch gekennzeichnet, daß** die Schaltkupplung eine hinterlegungsfreie Verzahnung an einer von dem Aktuator betätigbaren Schaltmuffe oder am Kupplungskörper aufweist.

## Claims

1. A method for controlling a drive train of a motor vehicle, said drive train comprising a single friction clutch (14) which is actuatable by means of a first actuator (60) and is connected at the input side with a motor (12) of said vehicle, and a step transmission (16) which is connected to the output side of said friction clutch (14) and comprises a first plurality of wheel sets (30 - 40), for engaging and disengaging corresponding forward gears (1 to 6), and a corresponding plurality of positive gear shift clutches (44 - 54), each of said gear shift clutches having synchronization means and being actuatable by a second plurality of second actuators (62, 64, 66; 62', 64', 66') for engaging and disengaging said gears (1 to 6), wherein the first actuator (60) and said second actuators (62, 64, 66; 62', 64', 66') are controlled in coordinated manner during a gear change,
**characterized in that**
said synchronization means are suited for synchronizing under partial load, and said actuators (60 - 66; 62', 64', 66') are controlled such that the friction clutch (14) is not completely opened for at least one type (A; B) of gear change, wherein during said gear change a synchronization means of the gear (e.g. 2) to be engaged is operated in slip condition before disengaging the old gear, to transfer the torque (M_{M}) present at the input of the transmission.

2. The method of claim 1, **characterized in that** during the gear change, before disengaging the engaged gear (e.g. 1), the associated gear shift clutch (e.g. 44) is biased in disengaging direction.

3. The method of claim 1 or 2, **characterized in that** during the gear change (A; B), the friction clutch (14) is partially opened and/or the torque (M_{M}) supplied from the motor is reduced by means of a motor actuator (68).

4. The method of claim 3, **characterized in that** the torque present at the input side of the step transmission (16) is reduced for a short time (Δt) after disengaging the previously engaged gear (e.g. 1), after reaching the synchronization speed and during engagement of the gear (e.g. 2) to be engaged, to reduce the built-up of different speeds when transferring the present torque from the synchronization means to the idler of the associated gear wheel set (e. g. 32).

5. The method of claim 1, **characterized in that** one and the same drive train is controlled to carry out a gear change under one of three possible modes (A, B, C) depending on the conditions of the gear change to be made, wherein the three possible modes (A, B, C) of gear changes take place with an opened (C), a closed (B) and a slipping (A) friction clutch (14), respectively.

6. An automated drive train of a motor vehicle, for carrying out the method according to any of claims 1 to 5, comprising:
a single friction clutch (14), which is actuatable by means of a first actuator (60) and is connected at the input side with a motor (12) of the vehicle,
a step transmission (16) which is connected to the output side of the friction clutch (14) and comprises a first plurality of wheel sets (30 - 40; 30' - 40') for engaging and disengaging corresponding forward gears (1 to 6) and a corresponding plurality of positive gear shift clutches (44 - 54), the gear shift clutches having synchronization means and being actuatable by a second plurality of second actuators (62, 64, 66; 62', 64', 66') for engaging and disengaging the gears (1 - 6), and
a controller (70) controlling said first actuator (60) and said second actuators (62, 64, 66; 62', 64', 66') in coordination with one another,
**characterized in** said
the gear shift clutches (44 - 54) are adapted and said controller (70) controls said actuators (60 - 66; 62', 64', 66') such that at least one gear change takes place without opening the friction clutch (14) completely.

7. The drive train of claim 6, **characterized in that** at least one of the second actuators (62, 64, 66; 62', 64', 66') is configured to control two gear shift clutches (44, 50 and 46, 54 and 48, 52, respectively), the two gear shift clutches (44, 50 and 46, 54 and 48, 52, respectively) being associated with gears (1, 4 and 2,6 and 3, 5, respectively), not neighboring one another, and that two further gears (2-3, 3-4, 4-5; 1-4, 3-5) lie between the two gears (1-4, 2-5, 3-6; 1-5, 2-6).

8. The drive train of claim 6 or 7, **characterized in that** the synchronization means comprises a cone synchronizer having a cone angle of more than 6°.

9. The drive train of claim 6 or 7, **characterized in that** the synchronization means comprises a multi-disc synchronizer.

10. The drive train of any of claims 6 to 9, **characterized in that** the gear shift clutch has asymmetrically tipped teeth on a sliding sleeve actuatable by said actuator.

11. The drive train of any of Claims 6 to 10, **characterized in that** the gear shift clutch comprises gear teeth not having a back cutting on the sliding sleeve actuatable by the actuator, or on the coupling body.

## Revendications

1. Procédé de commande de la chaîne de transmission d'un véhicule automobile, qui comporte un seul embrayage à friction (14), lequel est actionné au moyen d'un premier actionneur (60) et est relié côté entrée à un moteur (12) du véhicule automobile, ainsi qu'une boîte de vitesses (16) qui est reliée au côté sortie de l'embrayage à friction (14) et qui comporte une première pluralité de jeux de roues (30-40) pour engager et dégager des marches avant (1 à 6) correspondantes et une pluralité correspondante d'accouplements de commande (44-54) par complémentarité de forme, lesquels comportent chacun leur propre dispositif de synchronisation et qui sont actionnés au moyen d'une deuxième pluralité de deuxièmes actionneurs (62, 64, 66 ; 62', 64', 66') pour engager et dégager les rapports (1 à 6), le premier actionneur (60) et les deuxièmes actionneurs (62, 64, 66 ; 62', 64', 66') étant commandés de manière coordonnée l'un avec l'autre lors d'un changement de rapport,
**caractérisé en ce que**
les dispositifs de synchronisation conviennent à un processus de synchronisation sous charge partielle et **en ce que** les actionneurs (60-66 ; 62', 64', 66') sont commandés de manière que l'embrayage à friction (14) ne soit pas totalement ouvert pour au moins un type (A ; B) de changement de rapport, pour lequel un dispositif de synchronisation du rapport à engager (par exemple 2) est actionné avec glissement avant de dégager le rapport encore engagé (par exemple 1), afin de transmettre le couple (M_{M}) qui s'applique côté entrée de la transmission.

2. Procédé selon la revendication 1, **caractérisé en ce que** lors du changement de rapport, avant de dégager le rapport engagé (par exemple 1), l'accouplement de changement de vitesse (par exemple 44) associé est précontraint dans la direction du dégagement.

3. Procédé selon la revendication 1 ou 2, **caractérisé en ce que** lors du changement de rapport (A ; B), l'embrayage à friction (14) est partiellement ouvert et/ou le couple (M_{M}) fourni par le moteur (12) est réduit au moyen d'un actionneur (68) du moteur.

4. Procédé selon la revendication 3, **caractérisé en ce qu'**après le dégagement du rapport engagé auparavant (par exemple 1), après que la vitesse de rotation synchrone est atteinte et pendant l'engagement du rapport à engager (par exemple 2), le couple qui s'applique à la boîte de vitesses (16) est réduit brièvement (Δt), afin de réduire l'établissement de vitesses de rotation différentielles, lors de la transmission du couple s'appliquant du dispositif de synchronisation à la roue folle du jeu de roues associé (par exemple 32).

5. Procédé selon la revendication 1, **caractérisé en ce que** suivant les conditions marginales d'un changement de rapport en cours, une seule et même chaîne de transmission est commandée suivant l'un de trois types possibles (A, B, C) pour effectuer un changement de rapport, les trois types possibles (A, B, C) de changement de rapport s'effectuant avec l'embrayage à friction (14) ouvert (C), fermé (B) ou glissant (A).

6. Chaîne de transmission automatisée d'un véhicule automobile pour la mise en oeuvre du procédé selon l'une des revendications 1 à 5, comportant :
un seul embrayage à friction (14) qui peut être actionné au moyen d'un premier actionneur (60) et qui est relié côté entrée à un moteur (12) du véhicule automobile,
une boîte de vitesses (16) qui est reliée au côté entrée de l'embrayage à friction (14) et qui comporte une première pluralité de jeux de roues (30 -40 ; 30'-40') pour engager et dégager des marches avant (1 à 6) correspondantes et une pluralité correspondante d'accouplements de commande (44-54) par complémentarité de forme, lesquels comportent chacun leur propre dispositif de synchronisation et qui sont actionnés au moyen d'une deuxième pluralité de deuxièmes actionneurs (62, 64, 66 ; 62', 64', 66') pour engager et dégager les rapports (1 à 6), et
un dispositif de commande (70) qui commande le premier actionneur (60) et le deuxième actionneur (62, 64, 66 ; 62', 64', 66') de manière coordonnée entre eux,
**caractérisée en ce que** des accouplements de commande (44-54) sont agencés et le dispositif de commande (70) commande les actionneurs (60-66 ; 62', 64', 66') de manière qu'au moins un changement de rapport s'effectue sans ouvrir totalement l'embrayage à friction (14).

7. Chaîne de transmission selon la revendication 6, **caractérisée en ce qu'**au moins l'un des deux actionneurs (62, 64, 66 ; 62', 64', 66') est prévu pour la commande de deux accouplements de commande (44-50 ou 46-54 ou 48-52), **en ce que** les deux accouplements de commande (44-50 ou 46-54 ou 48-52) sont affectés à des rapports (1-4 ou 2-6 ou 3-5) qui ne sont pas voisins, et **en ce qu'**entre les deux rapports (1-4, 2-5, 3-6 ; 1-5, 2-6) se trouvent deux autres rapports (2-3, 3-4, 4-5 ; 1-4, 3-5).

8. Chaîne de transmission selon la revendication 6 ou 7, **caractérisée en ce que** le dispositif de synchronisation comporte une synchronisation conique qui présente un angle de cône de plus de 6°.

9. Chaîne de transmission selon la revendication 6 ou 7, **caractérisée en ce que** le dispositif de synchronisation comporte un synchronisation à lamelles.

10. Chaîne de transmission selon l'une des revendications 6 à 9, **caractérisée en ce que** l'accouplement de commande comporte une denture affilée de manière asymétrique sur un manchon de commande qui peut être actionné par l'actionneur.

11. Chaîne de transmission selon l'une des revendications 6 à 10, **caractérisée en ce que** l'accouplement de commande comporte une denture sans détalonnage sur un manchon de commande pouvant être actionné par l'actionneur ou sur le corps d'accouplement.
